# EUROPÄISCHE PATENTSCHRIFT

(11) **EP 1 738 928 B1**
(45) Veröffentlichungstag und Bekanntmachung des Hinweises auf die Patenterteilung: **25.06.2008**
(21) Anmeldenummer: 06116048.7
(22) Anmeldetag: 26.06.2006
(51) Int. Cl.: B60B 35/10, A01D 75/00

(54) **Radachse für einen Mähdrescher**
Wheel axle for a combine harvester
Essieu de roue pour une moissoneuse-batteuse

(30) Priorität: 29.06.2005 CH 11002005
(43) Veröffentlichungstag der Anmeldung: 03.01.2007
(73) Patentinhaber: LAVERDA S.p.A., 36042 Breganza VI (IT)
(72) Erfinder: Rohner, Marc, 5415 Rieden (CH); Bucher, Markus, 6017 Ruswil (CH); Blum, Hanspeter, 6147 Altbüron (CH)
(74) Vertreter: Falk, Urs

(56) Entgegenhaltungen:
- EP-A- 1 518 720
- EP-A- 1 529 722
- CH-A5- 693 740
- DE-A1- 3 922 260

## Beschreibung

Die Erfindung betrifft eine Radachse für einen Mähdrescher.

Mähdrescher sind unter anderem als sogenannte Hang- oder Halbhangmähdrescher ausgebildet. Deren Räder sind auf hydraulische, pneumatische oder mechanische Weise höhenverstellbar, um das damit gekoppelte Chassis, die Führerkabine, sowie insbesondere alle Prozessorgane des Mähdreschers auch bei topografischer Neigung in waagrechter Position zu halten.

Wegen des enormen Gewichts dieser Mähdrescher wird eine möglichst breite Bereifung angestrebt, um den Bodendruck auf ein Minimum zu reduzieren. Der breiten Bereifung stehen aber die Strassenverkehrsbestimmungen der Schweiz wie auch einzelner anderer europäischer Länder entgegen, die nur Fahrzeuge zulassen, deren maximale Fahrzeugaussenbreite 3.5 m nicht übersteigt. So sind die Hang- oder Halbhangmähdrescher einiger Hersteller, die bereits ab Werk mit der in der Landwirtschaft geforderten breiten Bereifung ausgestattet sind, entweder in der Schweiz nicht zugelassen, oder sie müssen mit einer aufwendigen Radaufhängung versehen werden, die für Fahrten auf den öffentlichen Strassen eine Verkleinerung der Fahrzeugaussenmasse auf das gesetzliche Maximum ermöglicht. So ist z.B. aus der CH 693740 A5 ein landwirtschaftliches Fahrzeug bekannt, dessen Spurweite verstellbar ist. Aus der EP 1529722 ist eine Vorrichtung zum Verstellen der Spurweite von zwei Rädern der gleichen Achse bekannt. Bei dieser Vorrichtung ist der horizontale Abstand zwischen den beiden Rädern verstellbar, damit die Spurweite des Fahrzeugs den verschiedenen Abständen der verschiedenen Kulturen angepasst werden kann. Die beiden Räder werden entweder beide aufeinander zu oder beide auseinander bewegt, um die Spurweite entweder zu verringern oder zu vergrössern.

Der Erfindung liegt die Aufgabe zugrunde, Mähdrescher beliebiger Marke und Bauart so zu verbessern, dass auch bei grosser und breiter Bereifung und grossem Fahrwerks-Hangneigungsausgleich die gesetzliche maximale Fahrzeugaussenbreite von derzeit 3.5 m für Fahrten auf öffentlichen Strassen nicht überschritten wird.

Die genannte Aufgabe wird erfindungsgemäss gelöst durch die Merkmale des Anspruchs 1. Vorteilhafte Ausführungen ergeben sich aus den abhängigen Ansprüchen.

Das der Erfindung zugrunde liegende Problem wird gelöst durch eine Radachse, die einen Achskasten, zwei am Achskasten befestigte Radaufhängungen und zwei im Achskasten angeordnete Schiebemodule für die Verstellung der beiden Radaufhängungen umfasst, wobei jede Radaufhängung einen Oberlenker, einen Unterlenker und einen Getriebeträger aufweist, wobei ein erstes Ende des Oberlenkers am Achskasten und ein entgegengesetztes Ende des Oberlenkers am Getriebeträger und wobei ein erstes Ende des Unterlenkers am Achskasten und ein entgegengesetztes Ende des Unterlenkers am Getriebeträger drehbar gelagert ist, so dass der Getriebeträger, an dem das Rad befestigt ist, immer senkrecht zur Radachse ausgerichtet ist, wobei die beiden Radaufhängungen in vertikaler Richtung verstellbar sind und wobei die beiden Radaufhängungen in einer ersten Betriebsart einzeln steuerbar und in einer zweiten Betriebsart in entgegengesetzter vertikaler Richtung bewegbar sind.

Um den zur Verfügung stehenden Platz optimal auszunützen, sind die beiden Schiebemodule bevorzugt quer zur Radachse zueinander versetzt. Die beiden Schiebemodule können hydraulisch oder pneumatisch betätigbare Kolben-Zylindereinheiten sein, die im normalen Arbeitsbetrieb des Mähdreschers hydraulisch bzw. pneumatisch so koppelbar sind, dass sich deren Kolben gegenläufig zueinander bewegen. Die beiden Schiebemodule können aber auch elektromechanische Spindelhubantriebe sein, deren Spindeln sich im normalen Arbeitsbetrieb des Mähdreschers gegenläufig zueinander bewegen. Der Ausgleich der Hangneigung erfolgt also durch eine entsprechende gegenläufige Auslenkung der beiden Radaufhängungen.

Der mit einer solchen Radachse ausgerüstete Mähdrescher enthält des weiteren einen Sensor, der die Lage der Radachse misst, und eine Steuerung, die das Ausgangssignal des Sensors im normalen Arbeitsbetrieb so in Stellbefehle für die Schiebemodule umsetzt, dass die Radachse unabhängig von der Topographie annähernd waagrecht ausgerichtet bleibt.

Einerseits kann die erfindungsgemässe Radachse bei neuen Modellen direkt vom Hersteller eingebaut werden. Andererseits sind bestehende Modelle, beispielsweise die Mähdrescher M303 (T) / M304 (T) /255 REV der Firma Laverda, die Mähdrescher Beta 7260 / Activa 7240 / Activa 7245 der Firma Massey Ferguson, die Mähdrescher 5220E / 5250E / 5270C der Firma Fendt und die Mähdrescher 644 / 645 /648 der Firma Challenger, mit der erfindungsgemässen Radachse nachrüstbar.

Die Erfindung wird nachfolgend anhand eines Ausführungsbeispiels und anhand der Zeichnung näher erläutert.

Es zeigen:
- Fig. 1: in seitlicher Ansicht eine Radachse für einen Mähdrescher,
- Fig. 2: die Radachse in Aufsicht, und
- Fig. 3: einen Unterlenker der Radachse in isometrischer Darstellung.

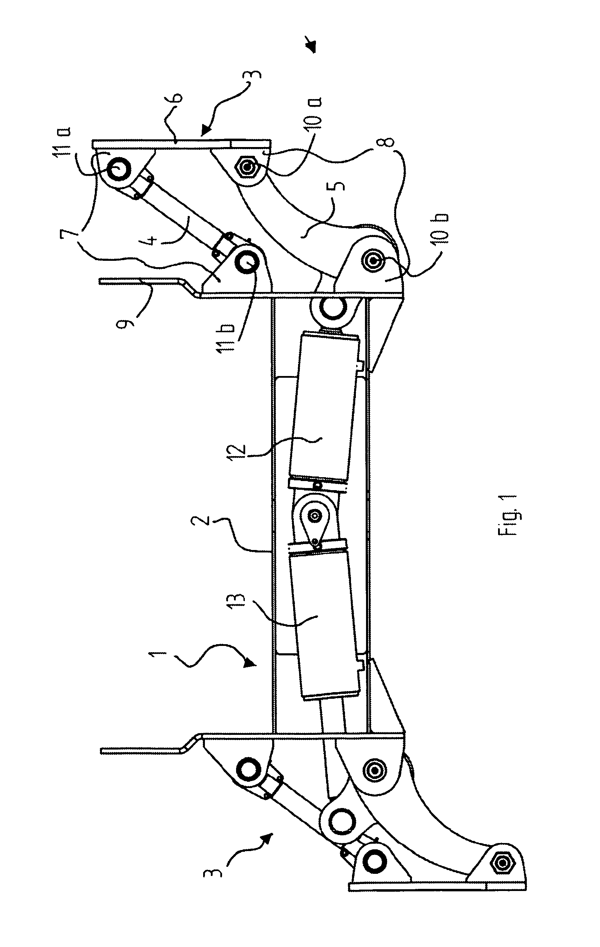

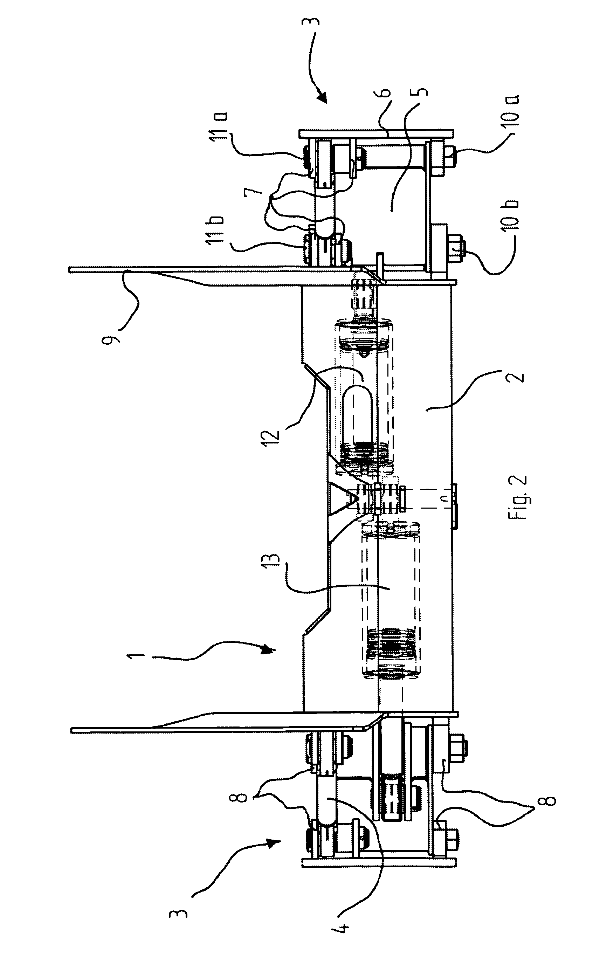

Die Fig. 1 und 2 zeigen eine Radachse 1 für einen Mähdrescher. Die Radachse 1 besteht aus einem Achskasten 2, zwei am Achskasten 2 befestigten Radaufhängungen 3 und einem Antrieb für die Verstellung der beiden Radaufhängungen 3. Die beiden Radaufhängungen 3 sind identisch aufgebaut. Die Radaufhängung 3 umfasst einen Oberlenker 4, einen Unterlenker 5, einen Getriebeträger 6, Oberlenkerlaschen 7 und Unterlenkerlaschen 8. Am Getriebeträger 6 ist ein nicht dargestelltes Rad befestigt. Zwei Oberlenkerlaschen 7 und zwei Unterlenkerlaschen 8 sind an einem Seitentragblech 9 des Achskastens 2 befestigt, zwei weitere Oberlenkerlaschen 7 und zwei weitere Unterlenkerlaschen 8 sind am Getriebeträger 6 befestigt. Der Unterlenker 5 ist mittels zweier Unterlenkerbolzen 10a und 10b in den Unterlenkerlaschen 8 drehbar gelagert, der Oberlenker 4 ist mittels zweier Oberlenkerbolzen 11a und 11b in den Oberlenkerlaschen 7 drehbar gelagert. Die Länge des Unterlenkers 5 und die Länge des Oberlenkers 4 sind so bemessen, dass die beiden Unterlenkerbolzen 10a und 10b und die beiden Oberlenkerbolzen 11a und 11b die vier Eckpunkte eines Parallelogramms bilden. Der Getriebeträger 6 ist deshalb immer parallel zum Seitentragblech 9 ausgerichtet. Der Unterlenker 5 ist als Winkelhebel ausgebildet und mittels eines Schiebemoduls verstellbar. Der Oberlenker 4 ist eine einfache Verbindungsstange und stellt die parallele Führung des Getriebeträgers 6 während der Verstellung des Unterlenkers 5 sicher.

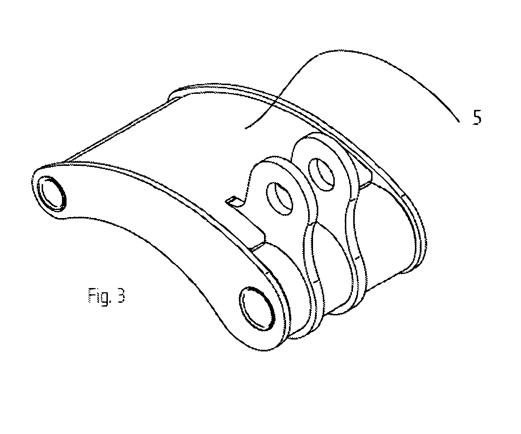

Die Fig. 3 zeigt eine bevorzugte Ausführungsform des Unterlenkers 5 als torsionssteifer Hohlkörper, der die vom Schiebemodul erzeugte Kraft in die Auf und Ab Bewegung der Radaufhängung 3 umsetzt, so dass der als einfache Verbindungsstange ausgebildete Oberlenker 4 keine Kraft übertragen, sondern nur die parallele Führung des Getriebeträgers 6 gewährleisten muss.

Der Antrieb umfasst also zwei Schiebemodule für die Verstellung der beiden Unterlenker 5 bzw. der beiden Radaufhängungen 3 und eine Steuerung für die Schiebemodule. Die beiden Schiebemodule sind vorzugsweise als hydraulische Kolben-Zylindereinheiten 12 und 13 ausgebildet, die von einem hydraulischen Antrieb angetrieben werden. Die beiden Kolben-Zylindereinheiten 12 und 13 sind in einer ersten Betriebsart einzeln steuerbar. In einer zweiten Betriebsart, nämlich im Arbeitsbetrieb des Mähdreschers, sind die beiden Kolben-Zylindereinheiten 12 und 13 über ein verstellbares Ventil so gekoppelt, dass das aus dem einen Zylinder verdrängte Öl dem anderen Zylinder zugeführt wird, so dass sich die beiden Kolben in entgegengesetzter horizontaler Richtung und somit die beiden Radaufhängungen in entgegengesetzter vertikaler Richtung bewegen. In der Fig. 1 ist die linke Radaufhängung nach unten, die rechte Radaufhängung gegenläufig nach oben um den gleichen Betrag ausgelenkt.

Die beiden Schiebemodule können auch als elektromechanische Spindelhubantriebe oder als pneumatische Kolben-Zylindereinheiten ausgebildet sein. Sie werden im Arbeitsbetrieb des Mähdreschers bevorzugt so betrieben, dass sich deren Spindeln bzw. Kolben gegenläufig zueinander bewegen, damit die beiden Radaufhängungen in entgegengesetzter Richtung bewegt werden, um die Radachse waagrecht zu halten.

Die beiden Schiebemodule sind lineare Schiebemodule, die einen Punkt auf einer Achse verschieben. Die Schiebemodule sind liegend angeordnet, d.h. so, dass ihre Achse parallel zur Radachse verläuft. Bevorzugt sind sie zudem quer zur Radachse zueinander versetzt, wie dies in der Fig. 2 dargestellt ist. Mit dieser Konstruktion ist der zur Verfügung stehende Platz optimal ausgenutzt.

Die erfindungsgemässe Radachse ist konzipiert für den Einsatz als Vorderachse eines Mähdreschers. Im Arbeitsbetrieb des Mähdreschers sorgt ein Sensor dafür, dass die Radachse unabhängig von der Hangneigung horizontal ausgerichtet bleibt. Die Steuerung bildet aufgrund des Ausgangssignals des Sensors ein Stellsignal für den Antrieb bzw. die beiden Schiebemodule.

## Patentansprüche

1. Radachse für einen Mähdrescher, mit einem Achskasten (2), zwei am Achskasten (2) befestigten Radaufhängungen (3) und zwei im Achskasten (2) angeordneten Schiebemodulen für die Verstellung der Radaufhängungen (3), **dadurch gekennzeichnet, dass** jede Radaufhängung (3) einen Oberlenker (4), einen Unterlenker (5) und einen Getriebeträger (6) aufweist, wobei ein erstes Ende des Oberlenkers (4) am Achskasten (2) und ein entgegengesetztes Ende des Oberlenkers (4) am Getriebeträger (6) und wobei ein erstes Ende des Unterlenkers (5) am Achskasten (2) und ein entgegengesetztes Ende des Unterlenkers (5) am Getriebeträger (6) drehbar gelagert ist, wobei die beiden Radaufhängungen (3) in vertikaler Richtung verstellbar sind und wobei die beiden Radaufhängungen (3) in einer ersten Betriebsart einzeln steuerbar und in einer zweiten Betriebsart in entgegengesetzter vertikaler Richtung bewegbar sind.

2. Radachse nach Anspruch 1, **dadurch gekennzeichnet, dass** der Unterlenker (5) als torsionssteifer Hohlkörper und der Oberlenker (4) als Verbindungsstange ausgebildet ist.

3. Radachse nach Anspruch 1 oder 2, **dadurch gekennzeichnet, dass** die beiden Schiebemodule liegend angeordnet sind, so dass ihre Achsen parallel zur Radachse verlaufen.

4. Radachse nach Anspruch 3, **dadurch gekennzeichnet, dass** die beiden Schiebemodule quer zur Radachse zueinander versetzt sind.

5. Radachse nach einem der Ansprüche 1 bis 4, **dadurch gekennzeichnet, dass** die beiden Schiebemodule Kolben-Zylindereinheiten (12, 13) sind.

6. Radachse nach Anspruch 5, **dadurch gekennzeichnet, dass** die beiden Kolben-Zylindereinheiten (12, 13) so koppelbar sind, dass sich deren Kolben gegenläufig zueinander bewegen.

7. Radachse nach Anspruch 6, **dadurch gekennzeichnet, dass** das aus dem einen Zylinder verdrängte Öl dem anderen Zylinder zuführbar ist, so dass sich die beiden Kolben in entgegengesetzter horizontaler Richtung und somit die beiden Radaufhängungen in entgegengesetzter vertikaler Richtung bewegen.

8. Radachse nach einem der Ansprüche 1 bis 4, **dadurch gekennzeichnet, dass** die beiden Schiebemodule elektromechanische Spindelhubantriebe sind.

9. Radachse nach Anspruch 8, **dadurch gekennzeichnet, dass** die beiden elektromechanischen Spindelhubantriebe so steuerbar sind, dass sich deren Spindeln gegenläufig zueinander bewegen.

10. Mähdrescher mit einer Radachse nach einem der Ansprüche 1 bis 9, **gekennzeichnet durch** einen Sensor, der die Lage der Radachse misst, und eine Steuerung, die das Ausgangssignal des Sensors in der zweiten Betriebsart so in Stellbefehle für die Schiebemodule umsetzt, dass die Radachse unabhängig von der Topographie annähernd waagrecht ausgerichtet bleibt.

## Claims

1. Wheel axle for a harvester, with an axle box (2), two wheel suspensions (3) secured to the axle box (2) and two shift modules arranged in the axle box (2) for shifting the wheel suspensions, **characterized in that** each wheel suspension (3) comprises an upper link (4), a lower link (5) and a gear carrier (6), wherein a first end of the upper link (4) is pivotally mounted to the axle box (2) and an opposite end of the upper link (4) is pivotally mounted to the gear carrier (6) and wherein a first end of the lower link (5) is pivotally mounted to the axle box (2) and an opposite end of the lower link (5) is pivotally mounted to the gear carrier (6), wherein the two wheel suspensions (3) are displaceable in vertical direction and wherein the two wheel suspensions (3) are individually controllable in a first mode of operation and movable in opposite vertical direction in a second mode of operation.

2. Wheel axle according to claim 1, **characterized in that** the lower link (5) is formed as torsion-resistant hollow piece and the upper link (4) as connecting rod.

3. Wheel axle according to claim 1 or 2, **characterized in that** the two shift modules are arranged horizontally so that their axles run parallel to the wheel axle.

4. Wheel axle according to claim 3, **characterized in that** the two shift modules are displaced transversely to the wheel axle with resepct to each other.

5. Wheel axle according to any of claims 1 to 4, **characterized in that** the two shift modules are piston-cylinder units (12, 13).

6. Wheel axle according to claim 5, **characterized in that** the two piston-cylinder units (12, 13) may be coupled such that their pistons move in opposite directions towards each other.

7. Wheel axle according to claim 6, **characterized in that** the oil squeezed out from the one cylinder may be fed to the other cylinder so that the two pistons move in opposite horizontal direction and the two wheel suspensions therefore move in opposite vertical direction.

8. Wheel axle according to any of claims 1 to 4, **characterized in that** the two shift modules are electromechanical spindle drives with shaft joint.

9. Wheel axle according to claim 8, **characterized in that** the two electromechanical spindle drives with shaft joint may be controlled such that their spindles move in opposite directions towards each other.

10. Harvester with a wheel axle according to any of claims 1 to 9, **characterized by** a sensor, which measures the position of the wheel axle, and a control unit that transforms the output signal of the sensor in the second mode of operation into movement commands for the shift modules in such a way that the wheel axle remains approximately horizontally aligned independently of the topography.

## Revendications

1. Essieu de roue pour une moissonneuse-batteuse, comprenant une boîte d'essieu (2), deux suspensions de roue (3) fixées sur la boîte d'essieu (2) et deux modules coulissants agencés dans la boîte d'essieu (2) pour le réglage des suspensions de roue (3), **caractérisé en ce que** chaque suspension de roue (3) présente un bras de direction supérieur (4), un bras de direction inférieur (5) et un support de transmission (6), dans lequel une première extrémité du bras de direction supérieur (4) est montée avec faculté de rotation sur la boîte d'essieu (2) et une extrémité opposée du bras de direction supérieur (4) est montée avec faculté de rotation sur le support de transmission (6), et dans lequel une première extrémité du bras de direction inférieur (5) est montée avec faculté de rotation sur la boîte d'essieu (2) et une extrémité opposée du bras de direction inférieur (5) est montée avec faculté de rotation sur le support de transmission (6), dans lequel les deux suspensions de roue (3) sont réglables en direction verticale et dans lequel les deux suspensions de roue (3) peuvent être commandées individuellement dans un premier mode de service et peuvent être déplacées dans un second mode de service dans la direction verticale opposée.

2. Essieu de roue selon la revendication 1, **caractérisé en ce que** le bras de direction inférieur (5) est réalisé comme corps creux rigide à la torsion et **en ce que** le bras de direction supérieur (4) est réalisé comme tige de liaison.

3. Essieu de roue selon l'une ou l'autre des revendications 1 et 2, **caractérisé en ce que** les deux modules coulissants sont agencés à l'horizontale de telle sorte que leurs axes s'étendent parallèlement à l'essieu de roue.

4. Essieu de roue selon la revendication 3, **caractérisé en ce que** les deux modules coulissants sont décalés l'un par rapport à l'autre, transversalement à l'essieu de roue.

5. Essieu de roue selon l'une des revendications 1 à 4, **caractérisé en ce que** les deux modules coulissants sont des unités à piston et à cylindre (12, 13).

6. Essieu de roue selon la revendication 5, **caractérisé en ce que** les deux unités à piston et à cylindre (12, 13) peuvent être accouplées de telle sorte que leurs pistons se déplacent en sens contraire l'un par rapport à l'autre.

7. Essieu de roue selon la revendication 6, **caractérisé en ce que** l'huile refoulée depuis le un cylindre peut être amenée vers l'autre cylindre de telle sorte que les deux pistons se déplacent en direction horizontale opposée et que les deux suspensions de roue se déplacent ainsi en direction verticale opposée.

8. Essieu de roue selon l'une des revendications 1 à 4, **caractérisé en ce que** les deux modules coulissants sont des entraînements de levage à broche électromécaniques.

9. Essieu de roue selon la revendication 8, **caractérisé en ce que** les deux entraînements de levage à broche électromécaniques peuvent être commandés de telle sorte que leurs broches se déplacent dans le sens opposé l'une par rapport à l'autre.

10. Moissonneuse-batteuse comprenant un Essieu de roue selon l'une des revendications 1 à 9, **caractérisée par** un capteur qui mesure la position de l'essieu de roue, et par une commande qui, dans le second mode de service, transpose le signal de sortie du capteur en instructions de positionnement pour les modules coulissants de telle sorte que l'essieu de roue reste orienté approximativement à l'horizontale, indépendamment de la topographie.
